# EUROPÄISCHE PATENTANMELDUNG

(11) **EP 1 186 520 A2**
(43) Veröffentlichungstag der Anmeldung: **13.03.2002**
(21) Anmeldenummer: 01121438.4
(22) Anmeldetag: 07.09.2001
(51) Int. Cl.: B62D 51/04

(54) **Handgeführtes Arbeitsgerät mit einer Antriebsvorrichtung und zu dessen Nachrüstung geeigneter Bausatz**

(30) Priorität: 08.09.2000 DE 10044728
(71) Anmelder: Telsnig, Kai, 34127 Kassel (DE)
(72) Erfinder: Haake, Jürgen, 21244 Buchholz (DE)
(74) Vertreter: Freiherr von Schorlemer, Reinfried, Dipl.-Phys.

(57) **Zusammenfassung**

Es wird ein handgeführtes Arbeitsgerät beschrieben, das einen fahrbaren Rahmen (1), der ein zu seiner Führung bestimmtes Rahmenteil (8) aufweist, eine am Rahmen (1) montierte und zu dessen Fortbewegung bestimmte Antriebsvorrichtung (4) mit einem zur stufenlosen Änderung der Fahrtgeschwindigkeit bestimmten Steuerelement (7), ein drehbar am Rahmenteil (8) gelagertes Drehteil (9, 10) zur Betätigung des Steuerelements (7) und wenigstens ein zusätzliches Bedienelement (19, 20) enthält. Erfindungsgemäß ist das Bedienelement (19, 20) am Drehteil (9, 10) befestigt und mit diesem mitdrehbar ausgebildet. Die Erfindung betrifft außerdem einen Bausatz, mit dem ein derartiges Arbeitsgerät nachgerüstet werden kann.

## Beschreibung

Die Erfindung betrifft ein handgeführtes Arbeitsgerät nach dem Oberbegriff des Anspruchs 1 und einen zu dessen Nachrüstung geeigneten Bausatz.

Bei Arbeitsgeräten der hier interessierenden Art stellt der Antriebsmotor ein Mittel zur Fortbewegung des Arbeitsgeräts dar. Zur Steuerung der Fahrgeschwindigkeit dient ein Steuerungssystem mit einem Drehteil, das an einem von einer Bedienungsperson zu ergreifenden Rahmenteil des Arbeisgeräts drehbar gelagert ist. Besonders vorteilhaft sind in diesem Zusammenhang Arbeitsgeräte, die vorwärts und rückwärts fortbewegt werden können und bei denen das Drehteil eine Umschaltung von Vorwärts auf Rückwärts und umgekehrt ermöglicht (CH 686 649 A5, "Der Motorist" 3/2000, S. 72). Dadurch ergibt sich der Vorteil, daß mit demselben Drehteil Vor- und Rückwärtsfahrten realisiert und die Fahrgeschwindigkeiten in beide Richtungen stufenlos verändert werden können.

Als Nachteil wird bei derartigen Steuerungen empfunden, daß sich die Stellung der das Drehteil bewegenden Hand relativ zu anderen vorhandenen, starr am Rahmen fixierten Bedienelementen (z.B. Brems-und Kupplungshebeln) ständig in Abhängigkeit davon ändert, mit welcher Geschwindigkeit und gegebenenfalls in welcher Richtung das Arbeitsgerät gerade fortbewegt wird. Die Bedienungsperson muß daher die Stellung der das Drehteil betätigenden Hand ständig ändern, damit sie im Wirkungsbereich der Bedienelemente verbleibt und auch plötzlich erforderlich werdende Betätigungen der Bedienelemente jeder Zeit durchführen kann. Das vermindert nicht nur den Bedienungskomfort, sondern erschwert auch die Anbringung von z. B. Totmannelementen erheblich.

Die Erfindung liegt daher die Aufgabe zugrunde, das Arbeitsgerät der eingangs bezeichneten Gattung und einen zu dessen Nachrüstung geeigneten Bausatz so auszubilden, daß die Bedienelemente in jeder Drehstellung des Drehteils eine günstige Lage zur betätigenden Hand einnehmen und ein ständiges Umgreifen der Hand unnötig ist.

Zur Lösung dieser Aufgabe dienen die kennzeichnenden Merkmale der Ansprüche 1 und 13.

Die Erfindung wird nachfolgend in Verbindung mit den beiligenden Zeichnungen an Ausführungsbeispielen näher erläutert. Es zeigen:
Fig. 1 und 2 ein erstes Ausführungsbeispiel eines erfindungsgemäßen, fahrbaren Arbeitsgeräts in zwei unterschiedlichen Betriebsstellungen;
Fig. 3 und 4 grob schematisch zwei weitere Ausführungsbeispiele des erfmdungsgemäßen Arbeitsgeräts.

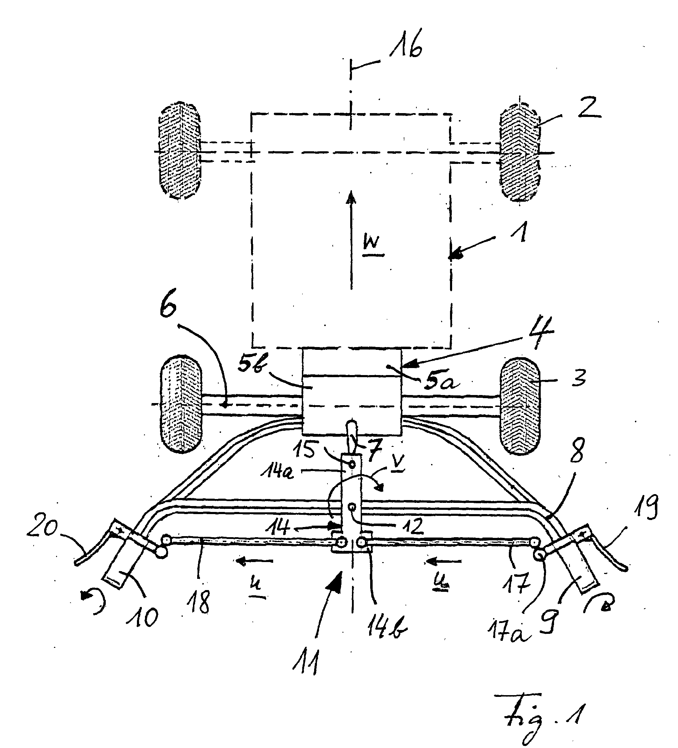

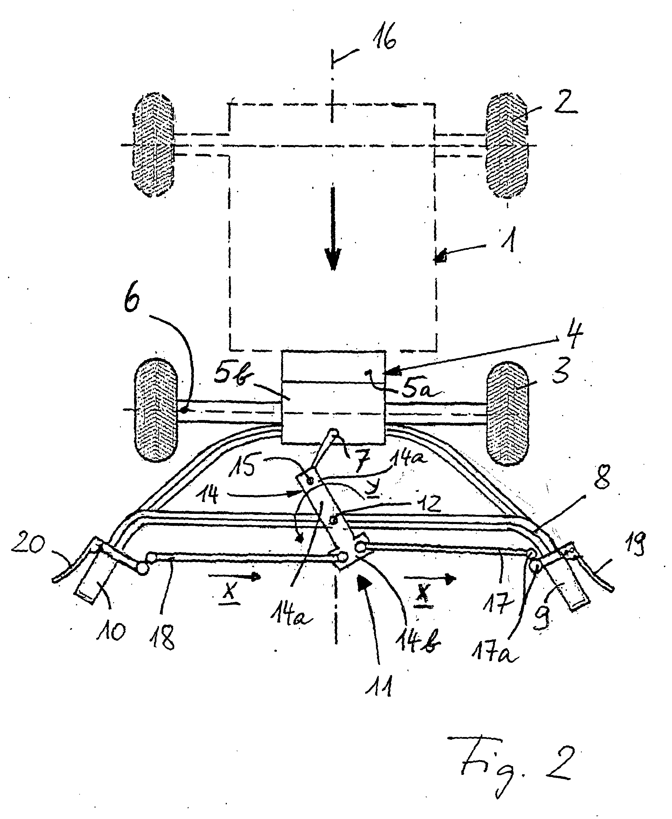

Nach Fig. 1 und 2 enthält ein erfindungsgemäßes Arbeitsgerät einen nur schematisch angedeuteten Rahmen 1, der auf je zwei vorderen und hinteren Rädern 2 bzw. 3 fahrbar angeordnet ist, wobei wenigstens eines der Räder 2 bzw. 3, hier wenigstens eines der beiden hinteren Räder 3, in nicht näher dargestellter Weise von einer Antriebsvorrichtung 4 zwangsweise angetrieben wird. Die Antriebsvorrichtung 4 enthält zu diesem Zweck einen Verbrennungsmotor 5a, ein von diesem angetriebenes Getriebe 5b mit einer auf die hinteren Räder 3 wirkenden Abtriebswelle 6 und ein Steuerelement 7 zur Steuerung wenigstens einer Funktion, z.B. der Drehzahl des Verbrennungsmotors 5a. Bei einem besonders bevorzugten Ausführungsbeispiel der Erfindung ist das Getriebe 5b als hydrostatisches Getriebe ausgebildet und zweckmäßig so eingerichtet und mit dem Steuerelement 7 versehen, daß sich die Abtriebswelle 6, wenn das Steuerelement 7 eine Nullstellung nach Fig. 1 einnimmt, im Stillstand befindet. Wird das Steuerelement 7 dagegen aus der Nullstellung nach Fig. 1 heraus in die eine oder andere Richtung bewegt bzw. verschwenkt, dann dreht sich die Abtriebswelle 6 einerseits in dem einen oder anderen Drehsinn mit der Folge, daß die Räder 3 das Arbeitsgerät in Vorwärt- oder Rückwärtsrichtung antreiben, und andererseits in beiden Richtungen mit einer Drehzahl, die davon abhängt, wie weit das Steuerelement 7 aus der Nullstellung herausbewegt, z.B. verschwenkt worden ist. Dadurch ist neben der Richtungssteuerung auch eine stufenlose Änderung der Fahrgeschwindigkeit in beide Fahrtrichtungen möglich. Das Steuerelement 7 kann in an sich bekannter Weise z. B. der Steuerung des von einer Pumpe erzeugten Ölstroms oder auch zum Verschwenken einer schwenkbaren Ölpumpe des hydrostatischen Getriebes 56 dienen.

Das fahrbare Arbeitsgerät nach Fig. 1 und 2 ist im Ausführungsbeispiel als Rasenmäher ausgebildet, der unterhalb des Rahmen 1 mit einem nicht dargestellten, rotierenden Mähmesser versehen ist, das ebenfalls vom Verbrennungsmotor 5a angetrieben wird und in bekannter Weise und unabhängig von der Fahrgeschwindigkeit und Fahrtrichtung in Umdrehungen versetzt werden kann. Alternativ wäre es natürlich auch möglich, für das Mähmesser oder dergleichen einen zweiten, seperat steuerbaren Motor vorzusehen.

Am hinteren Ende des Rahmens 1 befindet sich ein an diesem starr montiertes Rahmenteil 8 in Form eines Führungsholms, der mit den Händen des Benutzers erfaßt wird, um das Arbeitsgerät zu führen, insbesondere vor sich herzuschieben. An diesem Rahmenteil 8 ist je ein Drehteil in Form eines Drehgriffs 9 bzw. 10 drehbar gelagert, wobei die Anordnung der Drehgriffe 9, 10 am Rahmenteil 8 so gewählt ist, daß beim normalen Gebrauch des Arbeitsgeräts der Drehgriff 9 von der rechten und der Drehgriff 10 von der linken Hand zu erfassen ist und jeder Drehgriff 9, 10 wenigstens etwa eine der Breite einer üblichen Hand entsprechende Breite besitzt. Beide Drehgriffe 9, 10 sind vorzugsweise an freien Enden des Rahmenteils 8 gelagert und mittels eines an sich beliebigen Kopplungsmechanismus 11 derart miteinander verbunden, daß sich beim Drehen des Drehgriffs 9 automatisch auch der Drehgriff 10 und umgekehrt beim Drehen des Drehgriffs 10 automatisch auch der Drehgriff 9 dreht, und zwar vorzugsweise jeweils um identische Drehwinkel. Dabei kann der Kopplungsmechanismus 11 wahlweise so ausgebildet sein, daß sich beide Drehgriffe 9, 10 zwangsweise jeweils im gleichen Drehsinn oder im entgegengesetzten Drehsinn drehen.

Im Ausführungsbeispiel enthält der Kopplungsmechanismus 11 eine Hebelmechanik mit einem in der Mitte zwischen den beiden Drehgriffen 9, 10 angeordneten, zweiarmigen Hebel 14, der in einem mittleren Abschnitt bei 12 am Rahmen 1 oder Rahmenteil 8 schwenkbar gelagert ist und einen bei 15 mit dem Steuerelement 5 gelenkig verbundenen ersten Hebelarm 14a und einen zweiten Hebelarm 14b aufweist. In der aus Fig. 1 ersichtlichen Nullstellung sind das Steuerelement 5 und der Hebel 14 z. B. hintereinander und im wesentlichen koaxial zu einer Mittelachse 16 des Arbeitsgeräts angeordnet.

An dem zweiten Hebelarm 14b sind die einen Enden von zwei Stangen 17, 18 angelenkt. Das andere Ende der Stange 17 ist z. B. mit Hilfe von Kugelkopf-Gelenken 17a gelenkig mit dem Drehgriff 9 verbunden, während das freie Ende der anderen Stange 18 gelenkig mit dem Drehgriff 10 verbunden ist. Wie Fig. 1 zeigt, sind die beiden Stangen 17, 18 in der Nullstellung des Steuerelements 5 im wesentlichen senkrecht zur Mittelachse 16 und koaxial hintereinander angeordnet.

Im übrigen ist die Anordnung z. B. so, daß bei gleichsinniger Kopplung ein Drehen eines der Drehgriffe 9, 10 im Gegenuhrzeigersinn eine Bewegung der Stangen 17, 18 in Richtung von Pfeilen u (Fig. 1) bewirkt und dadurch der Hebel 14 im Uhrzeigersinn (Pfeil v in Fig. 1) um die Lagerstelle 12 geschwenkt wird. Das hat zur Folge, daß das Steuerelement 7 so verschwenkt oder sonstwie bewegt wird, daß der Verbrennungsmotor 5a bzw. das Getriebe 5b die Abtriebswelle 6 im Sinne einer Vorwärtsbewegung des Arbeitsgeräts bewegt (Pfeil w in Fig. 1), wobei die Fahrgeschwindigkeit um so mehr zunimmt, je weiter der Drehgriff 9, 10 im Gegenuhrzeigersinn verdreht wird. Wird dagegen einer der Drehgriffe 9, 10 im entgegengesetzten Drehsinn (Uhrzeigersinn) gedreht, dann hat das eine Verschiebung der Stangen 17, 18 in Richtung von Pfeilen x in Fig. 2 und damit eine solche Verschwenkung des Hebels 14 im Gegenuhrzeigersinn (Pfeil y in Fig. 2) zur Folge, daß die Abtriebswelle 6 im Sinne einer Rückwärtsfahrt des Arbeitsgeräts (Pfeil z in Fig. 2) angetrieben wird. Sind die Drehgriffe 9, 10 gegensinnig gekoppelt, gilt im wesentlichen dasselbe mit dem Unterschied, daß die Drehgriffe in entgegengesetzte Richtungen gedreht werden müssen, um eine bestimmte Wirkung (z. B. Vorwärtsfahrt) zu bewirken. Außerdem ist zweckmäßig jeder Drehstellung der Drehgriffe 9, 10 eine bestimmte, eindeutige Stellung des Steuerelements 7 so zugeordnet, daß die beiden Drehgriffe 9, 10 in jeder Stellung des Steuerelements 7 stets Positionen einnehmen, die gleich oder gegensinnig gleich sind und einer bestimmten Fahrgeschwindigkeit entsprechen.

Die Erfindung bringt zahlreiche Vorteile mit sich. Zunächst ist es möglich, die Fahrtrichtung des Arbeitsgeräts wahlweise mit der rechten oder linken Hand zu wählen und zu verändern, indem der Hebel 14 aus der in Fig. 1 dargestellten Nullstellung heraus im Uhrzeiger- oder Gegenuhrzeigersinn bewegt wird. Es ist aber auch möglich, hierfür beide Hände zu verwenden, indem mit halbem Kraftaufwand auf beide Drehgriffe 9, 10 gleichzeitig eingewirkt wird. In entsprechender Weise kann die Fahrgeschwindigkeit gewählt bzw. geändert werden, indem der Hebel 14 durch Drehen an den Drehgriffen 9, 10 mehr oder weniger weit aus der Nullstellung herausgedreht wird. Schließlich kann das Arbeitsgerät wahlweise mit der rechten oder linken Hand erfaßt werden, um es hinter sich herzuziehen, und dabei wahlweise mit dem Drehgriff 9 bzw. 10 betätigt werden.

Wie Fig. 1 und 2 weiter zeigen, haben Arbeitsgeräte der hier interessierenden Art in der Regel auch je ein Bedienelement, z. B. einen Brems- oder Kupplungshebel. Dabei ist im Ausführungsbeispiel jedem der beiden Drehgriffe 9, 10 je ein Bedienelement 19 bzw. 20 zugeordnet, das demselben Zweck (z. B. Bremsen), aber auch unterschiedlichen Zwecken (z. B. Bremsen rechts, Kuppeln links) dienen kann.

Erfindungsgemäß sind die Bedienelemente 19, 20 so ausgebildet, daß sie sich mit den Drehgriffen 9, 10 mitdrehen. Dazu ist es möglich, die Drehgriffe 9, 10 gleichzeitig als Bedienelemente auszubilden, d. h. die Bedienelemente drehbar am Rahmenteil 8 zu lagern und so auszubilden, daß sie einerseits über nicht dargestellte Hebel und mit ihnen verbundene Bowdenzüge od. dgl. zum Bremsen oder Kuppeln verwendet, andererseits aber auch gedreht werden können, um auf die beschriebene Weise das Steuerelement 7 zu betätigen. Nach einer anderen Ausführungsform der Erfindung könnten die Bedienelemente 19, 20 aber aus üblichen Brems- oder Kupplungshebeln od. dgl. bestehen, die nicht wie üblich starr am Rahmenteil 8, sondern fest am jeweiligen Drehgriff 9, 10 befestigt werden, so daß sie sich bei deren Drehung automatisch mit diesen mitdrehen.

Durch die erfindungsgemäße Ausbildung und/oder Montage der Bedienelemente 19, 20 wird der wesentliche Vorteil erzielt, daß die Bedienelemente 19, 20 unabhängig davon, welche momentane Drehstellung sie oder die Drehgriffe 9, 10 gerade einnehmen, im wesentlichen stets dieselbe Lage zur betätigenden Hand aufweisen. Der Benutzer kann daher das Bedienelement 19, 20 praktisch in jeder Drehstellung bedienen, ohne mit der Hand umgreifen zu müssen.

Eine besonders bevorzugte Ausführungsform der Erfindung ergibt sich, wenn beide Bedienhebel 19, 20 als Bremshebel ausgebildet sind und jedes angetriebene Rad 3 des Arbeitsgeräts einzeln mit je einem der Bremshebel gebremst werden kann. In diesem Fall ist es möglich, das Arbeitsgerät während der Fahrt einseitig zu bremsen und dadurch auch zu lenken. Zur Begünstigung einer solchen Bremsmöglichkeit kann der Antrieb der hinteren Räder 3 z. B. über ein Ausgleichsgetriebe (Differential) erfolgen, das auch mit einer voll oder teilweise wirkenden Differentialsperre versehen werden könnte. Die Bremsen für die Räder 3 können dabei z. B. aus Trommelbremsen bestehen. Bei einer solchen Variante wirkt es sich besonders vorteilhaft aus, daß die Bedienelemente bzw. Bremshebel 19, 20 wie die Drehgriffe 9, 10 gedreht werden und daher stets in gleicher Weise verfügbar sind.

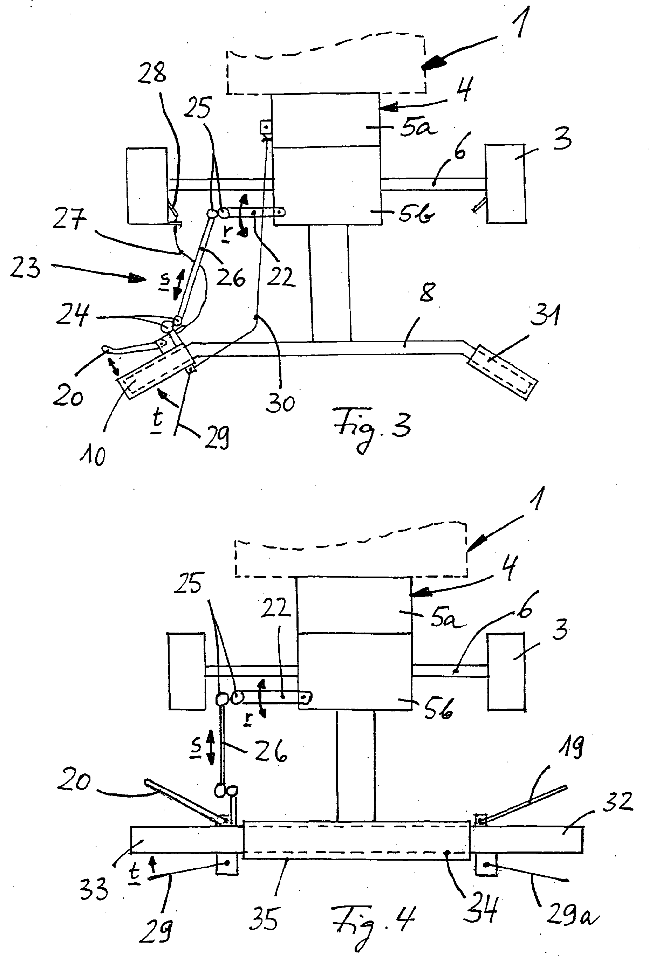

Beim Ausführungsbeispiel nach Fig. 3 entsprechen die mit den Bezugszeichen 1 bis 6, 8 bis 10 und 20 versehenen Teile im wesentlichen den mit entsprechenden Bezugszeichen versehenen Teilen der Fig. 1 und 2. Im Unterschied dazu ist das hydrostatische Getriebe 5b nicht in der Mitte, sondern an einem Seitenteil mit einem Steuerelement 22 versehen, das in seiner Wirkungsweise dem Steuerelement 7 nach Fig. 1 entspricht und z. B. in Richtung eines Doppelpfeils r hin- und hergeschwenkt werden kann.

Der Drehgriff 10 ist mit Hilfe einer seitlich angebrachten Mechanik 23, die z. B. aus Kugelgelenken 24, 25 und einer Stange 26 zusammengesetzt ist, direkt mit dem Steuerelement 22 verbunden. Dabei ist die Anordnung so getroffen, daß beim Drehen des Drehgriffs 10 im einen oder anderen Drehsinn die Stange 26 in Richtung eines Doppelpfeils s hin- und herbewegt und dadurch das Steuerelement 22 im Uhrzeigersinn oder im Gegenuhrzeigersinn verschwenkt wird. Durch diese Bewegungen wird, ausgehend von der Nullstellung nach Fig. 3, wie beim Ausführungsbeispiel nach Fig. 1 und 2 sowohl eine Auswahl der Fahrtrichtung als auch - mit größer oder kleiner werdender Verschwenkung des Steuerelements 22 - eine Auswahl der Fahrgeschwindigkeit getroffen.

Das hier als schwenkbarer Bremshebel ausgebildete Bedienelement 20 ist unmittelbar am Drehgriff 10 befestigt und dreht sich automatisch mit diesem mit. Über einen Bowdenzug 27 ist das Bedienelement 20 z. B. mit der Spannvorrichtung 28 einer Trommelbremse verbunden, die dem Rad 3 vorzugsweise zugeordnet ist.

Gemäß Fig. 3 ist ein weiteres, als Totmannelement ausgebildetes Bedienelement 29 fest mit dem Drehgriff 10 verbunden. Unter dem Totmannelement 29 wird hier ein Knopf, Griff od. dgl. verstanden, der von der Bedienungsperson permanent betätigt und hierzu z. B. niedergedrückt werden muß, um eine gewünschte Funktion des Arbeitsgeräts zu ermöglichen. Im Ausführungsbeispiel ist das Bedienelement 29 als ein durch eine Feder vorgespannter Schwenkhebel ausgebildet, der über einen Bowdenzug 30 mit dem Verbrennungsmotor 5a verbunden ist und während des Arbeitens mit dem Arbeitsgerät in Richtung eines Pfeils t zum Drehgriff 10 hin niedergedrückt sein muß, damit der Verbrennungsmotor 5a angelassen bzw. im eingeschalteten Zustand belassen werden kann. Wird das Totmannelement 29 dagegen unbeabsichtigt, beim Stolpern oder aufgrund einer Verletzung der Bedienungsperson od. dgl. losgelassen, dann schwenkt es unter der Wirkung der Feder zurück in die aus Fig. 3 ersichtliche Position, wodurch der Verbrennungsmotor 5a ausgeschaltet und das Arbeitsgerät unabhängig von der momentanen Drehstellung des Drehgriffs 10 abrupt zum Stillstand gebracht wird.

Ein in Fig. 3 rechter Handgriff 31 kann an sich beliebig gestaltet und auch undrehbar angeordnet sein. In diesem Fall erfolgt die Richtungs- und Geschwindigkeitswahl nur mit dem linken Drehgriff 10. Zusätzlich kann der Handgriff 31 natürlich auch mit wenigstens einem entsprechend stationär angeordneten Bedienelement versehen sein. Möglich wäre ferner, den Handgriff 31 ebenfalls als Drehgriff auszubilden und analog zu Fig. 1 und 2 mittels eines Kopplungsmechanismus 11 mit dem Drehgriff 10 zu koppeln.

Das in Fig. 4 dargestellte Ausführungsbeispiel unterscheidet sich von den Ausführungsbeispielen nach Fig. 1 bis 3 dadurch, daß zwei als Drehgriffe ausgebildete Drehteile 32, 33 durch eine Stange oder ein Rohr 34 koaxial und starr miteinander verbunden sind. Die Stange 34, die einen zum Kopplungsmechanismus 11 (Fig. 1 und 2) analogen Kopplungsmechanismus bildet, ist in einem als rohrförmiger Lagerbock ausgebildeten Rahmenteil 35 drehbar gelagert und bildet gleichzeitig einen Führungsholm für das Arbeitsgerät. Im übrigen ist die Anordnung analog zu Fig. 1 bis 3, so daß gleiche Teile mit denselben Bezugszeichen versehen sind. Wie in Fig. 1 und 2 kann hier nicht nur die Wahl der Fahrtrichtung und der Fahrgeschwindigkeit mit beiden Drehgriffen 32, 33 gesteuert werden, sondern es ist auch an beiden Drehgriffen 32, 33 wenigstens je ein Bedienelement 20, 29 bzw. 19, 29a vorhanden.

Als Arbeitsgeräte im Rahmen der vorliegenden Erfindung kommen zahlreiche handgeführte und mit Verbrennungsmotoren betriebene Arbeitsgeräte, insbesondere mit vier Rädern versehene Rasen-, Gestrüpp-, Wiesen- und Mulchmäher od. dgl. in Betracht. Daneben eignet sich die Erfindung aber auch z. B. für einachsige handgeführte Arbeitsgeräte, an die verschiedene Gerätschaften wie Pflüge, Fräsen, Mähbalken, Kastenanhänger od. dgl. auswechselbar angebaut werden können. Auch für Schneeschieber, Kehrmaschinen, kleine Transporter od. dgl. und andere, vorwiegend im kommunalen oder privaten Bereich einsetzbare Arbeitsgeräte ist die Erfindung anwendbar.

Bei den Bedienelementen 19, 20, 29 und 29a kann es sich um Bedienelemente mit unterschiedlichen Funktionen handeln. Neben den bereits genannten Bremshebeln und Totmannelementen kann es sich z. B. um Kupplungshebel handeln, deren Aufgabe darin besteht, den Fahrantrieb einzuschalten, indem z. B. eine zwischen dem Verbrennungsmotor 5a und dem Getriebe 5b befindliche Lamellenkupplung ein- oder ausgerückt oder ein den Motor 5a mit dem Getriebe 5b verbindender Keilriemen gespannt oder entspannt wird. Ein derartiger Kupplungshebel kann gleichzeitig als Totmannelement ausgebildet sein, das beim Loslassen durch eine Feder od. dgl. in eine ausgerückte Stellung gebracht wird und dadurch allein den Fahrantrieb abschaltet, während der Verbrennungsmotor 5a weiterläuft. Derselbe oder ein anderer Kupplungshebel könnte beim Loslassen zur Stillsetzung des Mähmessers oder eines anderen vom Motor 5a angetriebenen Werkzeugs dienen. Für diesen Zweck sowie zur Abschaltung des Fahrantriebs könnte alternativ auch eine elektromagnetische Kupplung zwischen den Motor 5a und das betreffende Werkzeug bzw. das Getriebe geschaltet sein.

Die Erfindung ist nicht auf das beschriebene Ausführungsbeispiel beschränkt, das auf vielfache Weise abgewandelt werden kann. Beispielsweise kann der Kopplungsmechanismus auch auf andere Weise anstatt als Hebelmechanik ausgebildet sein. Insbesondere können mit Seil- oder Kettenzügen, Zahnrädern, Zahnriemen oder sonstwie arbeitende Kopplungsmechanismen vorgesehen werden. Die Mittel zur Übertragung der Drehbewegungen der Drehgriffe 9, 10 bzw. 32, 33 auf die Steuerelemente 7 bzw. 22 können ebenfalls an sich beliebig ausgebildet sein. Hierzu können z. B. außer üblichen Bowdenzügen auch elektrische Bedienelemente Anwendung finden. Auch die Steuerelemente 7, 22 selbst können beliebig gestaltet sein. Beispielsweise kann zur Drehzahlregelung vorgesehen sein, die Durchflußmenge des Kraftstoffs von einem Vergaser zu einem Verbrennungsmotor mit üblichen Schiebern zu steuern. Möglich wäre auch, die Fahrgeschwindigkeit in Stufen einstellbar zu machen und Rastmittel od.dgl. vorzusehen, mittels derer die Drehteile bei jeder eingestellten Fahrgeschwindigkeit verrastbar bzw. festsetzbar sind. Weiter ist klar, daß die erfindungsgemäß durch einen Kopplungsmechanismus gekoppelten Drehgriffe unabhängig davon vorgesehen werden können, ob es sich um ein vorwärts- und rückwärts fortbewegbares Arbeitsgerät oder um ein in nur einer Richtung fahrbares Gerät handelt. Dabei kann das Rahmenteil 8 auch als ein Lenkholm od. dgl. sowie ein- oder mehrteilig ausgebildet sein, mit dem das Arbeitsgerät z. B. über die vorderen Räder 2 gelenkt wird, wenn hierfür keine einseitig wirkenden Bremsen vorgesehen sind. Weiter kann die Erfindung anstatt bei Arbeitsgeräten mit zwei oder mehr Achsen auch bei solchen mit Raupen Anwendung finden. Natürlich kann auf die beschriebene Weise auch ein vom Verbrennungsmotor 5a angetriebenes Werkzeug eines im Stillstand betriebenen Arbeitsgeräts gesteuert werden, wenn es erwünscht ist, das jeweilige Werkzeug mit einem Drehgriff zu steuern und ggf. in zwei entgegengesetzte Richtungen zu drehen oder zu bewegen. Auch ist die Ansteuerung anderer Funktionen als denen des Gasgebens, Bremsens oder Kuppelns möglich, wobei diese Steuerung teils mit Hilfe der Drehgriffe 9, 10 bzw. 32, 33 über den Verbrennungsmotor 5a, sein Getriebe 5b und das Steuerelement 7, 22 und teils mit Hilfe der Bedienelemente 19, 20 bzw. 29, 29a über andere Mittel erfolgen könnte. Beispielsweise könnte der Verbrennungsmotor 5a hierzu mit einem zusätzlichen Hebel versehen sein, mit dem sich die Drehzahl und damit die maximal mit Hilfe der Drehteile 9, 10 bzw. 32, 33 herstellbare Fahrgeschwindigkeit einstellen läßt. Weiterhin ist klar, daß die Erfindung nicht nur das mit dem beschriebenen Steuerungssystem ausgerüstete Arbeitsgerät, sondern auch einen zur Nachrüstung mit einem solchen Steuerungssystem geeigneten Bausatz umfaßt. Schließlich versteht sich, daß die verschiedenen Merkmale auch in anderen als den dargestellten und beschriebenen Kombinationen angewendet werden können.

## Patentansprüche

1. Handgeführtes Arbeitsgerät mit einem fahrbaren Rahmen (1), der ein zu seiner Führung bestimmtes Rahmenteil (8, 35) aufweist, einer am Rahmen (1) montierten und zu dessen Fortbewegung bestimmten Antriebsvorrichtung (4) mit einem zur stufenlosen Änderung der Fahrgeschwindigkeit bestimmten Steuerelement (7, 22), einem drehbar am Rahmenteil (8, 35) gelagerten Drehteil (9, 10 bzw. 32, 33) zur Betätigung des Steuerelements (7, 22) und wenigstens einem zusätzlichen Bedienelement (19, 20 bzw. 29, 29a), **dadurch gekennzeichnet, daß** das Bedienelement (19, 20, 29, 29a) am Drehteil (9, 10, 32, 33) angebracht und mit diesem mitdrehbar ausgebildet ist.

2. Arbeitsgerät nach Anspruch 1, **dadurch gekennzeichnet, daß** die Antriebsvorrichtung (4) zur Vorwärt- und Rückwärtsbewegung des Rahmens (1) und das Steuerelement (7, 22) sowohl zur Änderung der Fahrgeschwindigkeit als auch zur Änderung der Fahrtrichtung des Rahmens (1) eingerichtet ist.

3. Arbeitsgerät nach Anspruch 1 oder 2, **dadurch gekennzeichnet, daß** das Bedienelement (19, 20) ein Brems- oder ein Kupplungselement ist.

4. Arbeitsgerät nach einem der Ansprüche 1 bis 3, **dadurch gekennzeichnet, daß** das Bedienelement (29, 29a) als Totmannelement ausgebildet ist.

5. Arbeitsgerät nach einem der Ansprüche 1 bis 4, **dadurch gekennzeichnet, daß** es ein mit der Antriebsvorrichtung (4) antreibbares Werkzeug enthält.

6. Arbeitsgerät nach einem der Ansprüche 1 bis 5, **dadurch gekennzeichnet, daß** die Antriebsvorrichtung (4) einen Verbrennungsmotor (5a) und ein mit diesem verbundenes, mit dem Steuerelement (7, 22) und einer Abtriebswelle (6) versehenes, hydrostatisches Getriebe (5b) enthält.

7. Arbeitsgerät nach Anspruch 6, **dadurch gekennzeichnet, daß** das Steuerelement (7, 22) eine Nullstellung aufweist, in der die Abtriebswelle (6) auch bei laufendem Verbrennungs-motor (5a) im Stillstand ist.

8. Arbeitsgerät nach Anspruch 7, **dadurch gekennzeichnet, daß** das Steuerelement (7, 22) - ausgehend von der Nullstellung - in zwei Richtungen verstellbar ist und die Abtriebswelle (6) bei Bewegung des Steuerelements (7, 22) in eine dieser Richtungen auf Vorwärtslauf und bei Bewegung des Steuerelements (7, 22) in die andere der beiden Richtungen auf Rückwärtslauf geschaltet ist.

9. Arbeitsgerät nach einem der Ansprüche 1 bis 8, **dadurch gekennzeichnet, daß** es wenigstens ein zweites, drehbar am Rahmenteil (8, 35) gelagertes Drehteil (9, 10, 32, 33) aufweist und ein beide Drehteile (9, 10, 32, 33) verbindender Kopplungsmechanismus (11, 34) derart vorgesehen ist, daß eine Drehung irgendeines der Drehteile (9, 10, 32, 33) eine gleich- oder gegensinnige Drehung des jeweils anderen Drehteils (9, 10, 32, 33) zur Folge hat.

10. Arbeitsgerät nach einem der Ansprüche 1 bis 9, **dadurch gekennzeichnet, daß** das Drehteil (9, 10, 32, 33) als kompletter Drehgriff ausgebildet ist.

11. Arbeitsgerät nach Anspruch 10, **dadurch gekennzeichnet, daß** es wenigstens ein zweites, am zweiten Drehteil (9, 10, 32, 33) angebrachtes und mit diesem mitdrehbares Bedienelement (19, 20, 29, 29a) aufweist.

12. Arbeitsgerät nach einem der Ansprüche 9 bis 11, **dadurch gekennzeichnet, daß** der Kopplungsmechanismus (11) durch eine Hebelmechanik gebildet ist.

13. Bausatz für ein handgeführtes, einen fahrbaren Rahmen (1) aufweisendes Arbeitsgerät, das eine auf dem Rahmen (1) montierte Antriebsvorrichtung (4) aufweist, der ein zur Änderung der Fahrtrichtung und zur Änderung der Fahrgeschwindigkeit bestimmtes Steuerelement (7, 22) zugeordnet ist, **dadurch gekennzeichnet, daß** er wenigstens ein drehbar an einem Rahmenteil (8, 35) des Rahmens (1) montierbares, zur betriebsmäßigen Verbindung mit dem Steuerelement (7, 22) eingerichtetes Drehteil (9, 10, 32, 33) und ein am Drehteil (9, 10, 32, 33) befestigbares, mit diesem mitdrehbar ausgebildetes Bedienelement (19, 20, 29, 29a) enthält.

14. Bausatz nach Anspruch 13 **dadurch gekennzeichnet, daß** er wenigstens ein zweites, drehbar am Rahmenteil (8, 35) montierbares, zur betriebsmäßigen Verbindung mit dem Steuerelement (7, 22) eingerichtetes Drehteil (9, 10, 32, 33) und einen zur Verbindung der beiden Drehteile (9, 10, 32, 33) bestimmten Kopplungsmechanismus (11, 34) derart aufweist, daß im verbundenen Zustand der beiden Drehteile (9, 10, 32, 33) eine Drehung irgendeines der Drehteile (9, 10, 32, 33) eine gleich- oder gegensinnige Drehung des jeweils anderen Drehteils (9, 10, 32, 33) zur Folge hat.

15. Bausatz nach Anspruch 13 oder 14 **dadurch gekennzeichnet, daß** die Drehteile (9, 10, 32, 33) als komplette Drehgriffe ausgebildet sind.
